(19) Europäisches Patentamt
European Patent Office
Office européen des brevets

(11) **EP 2 519 728 B1**

(12) **FASCICULE DE BREVET EUROPEEN**

(45) Date de publication et mention
de la délivrance du brevet:
**07.02.2018 Bulletin 2018/06**

(21) Numéro de dépôt: **10808914.5**

(22) Date de dépôt: **22.12.2010**

(51) Int Cl.:
*F02G 1/04* *(2006.01)*    *F02G 5/02* *(2006.01)*

(86) Numéro de dépôt international:
**PCT/FR2010/052868**

(87) Numéro de publication internationale:
**WO 2011/080467 (07.07.2011 Gazette 2011/27)**

(54) **MACHINE THERMIQUE À SOURCE CHAUDE EXTERNE, GROUPE DE PRODUCTION D'ÉNERGIE ET VÉHICULE ASSOCIÉS.**

WÄRMEKRAFTMASCHINE MIT EXTERNE WÄRMEQUELLE UND ZUGEHÖRIGER STROMERZEUGUNGSEINHEIT SOWIE FAHRZEUG

HEAT ENGINE WITH EXTERNAL HEAT SOURCE AND ASSOCIATED POWER GENERATION UNIT AND VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **28.12.2009 FR 0959624**

(43) Date de publication de la demande:
**07.11.2012 Bulletin 2012/45**

(73) Titulaire: **H2P Systems**
**75002 Paris (FR)**

(72) Inventeur: **THEVENOD, Frédéric Olivier**
**75001 Paris (FR)**

(74) Mandataire: **Pontet Allano & Associes**
**Parc Les Algorithmes, Bâtiment Platon**
**CS 70003 Saint-Aubin**
**91192 Gif-sur-Yvette Cedex (FR)**

(56) Documents cités:
**WO-A1-2007/088463    WO-A1-2007/099438**
**US-A1- 2002 017 098**

# Description

La présente invention concerne une Machine thermique à source chaude externe, groupe de production d'énergie et véhicule associés. Elle concerne en outre la récupération de la chaleur d'échappement, notamment pour les applications sur véhicules de toute nature, notamment terrestres, maritimes ou aériens, mais aussi pour les applications de moteurs stationnaires.

On connaît différents modes de réalisation de machines thermiques exploitant une source chaude externe. Ces machines thermiques ont toutefois un faible rendement et une faible densité de puissance (massique et volumique).

Les pertes thermiques des moteurs à combustion interne expliquent en grande partie leur rendement modeste. La prise de conscience écologique et les restrictions législatives en matière d'émissions polluantes poussent à valoriser les pertes thermiques.

Toutefois l'énergie rejetée à l'échappement se présente sous forme d'un gaz à faible pression et température relativement modérée. La transformation de cette énergie rejetée en énergie mécanique par des moyens usuels se traduit par une machinerie lourde, encombrante, coûteuse et ayant une efficacité discutable. En particulier pour les applications sur véhicule, dans lesquels le poids, l'encombrement et le coût du moteur jouent un rôle important.

On connaît d'après le FR2905728, du même inventeur, une machine thermique à source chaude externe capable de transformer la chaleur des gaz d'échappement d'un moteur à combustion interne en énergie mécanique. De l'air prélevé dans l'atmosphère est comprimé dans un cylindre envoyé dans un échangeur de chaleur, puis renvoyé dans le cylindre où il est détendu en produisant de l'énergie mécanique recueillie par un piston, puis évacué à l'atmosphère. L'échangeur de chaleur est placé dans le flux des gaz d'échappement du moteur à combustion interne et joue le rôle d'accumulateur de pression.

Il existe aussi le WO 2007/088463 A1 et le WO 2007/099438 A1 qui décrivent un dispositif de récupération de la chaleur d'échappement incluant un moteur Stirling. Le US 2002/0017098 A1 décrit un système d'alternateur incluant un moteur Stirling.

Un objectif de l'invention est de proposer une machine thermique à source chaude externe ayant un rendement et une densité de puissance améliorés (massique et volumique).

Un second objectif de l'invention est de proposer une machine thermique à source chaude externe dont le poids, l'encombrement et le coût sont faibles.

Un troisième objectif de l'invention est de proposer une machine thermique capable d'exploiter l'énergie rejetée à l'issue d'un processus de combustion interne, en particulier compatible avec une application aux véhicules.

L'invention propose une machine thermique comprenant des moyens de compression pour comprimer un gaz de travail, une source de chaleur externe pour chauffer le gaz de travail comprimé dans un trajet fermé chaud, des moyens de détente du gaz de travail comprimé et chauffé prélevé à une sortie du trajet fermé chaud, caractérisée en ce que le gaz de travail détendu est ensuite envoyé aux moyens de compression par un trajet fermé froid passant par un échangeur de chaleur avec une source froide, en particulier l'atmosphère.

Dans cet exposé de l'invention, et dans la suite du texte, les adjectifs "chaud" et "froid" dans les expressions "trajet fermé chaud" et "trajet fermé froid" ont un sens relatif signifiant simplement que le trajet fermé chaud est généralement plus chaud que le trajet froid lors du fonctionnement de la machine thermique.

Grâce à cette architecture, il est possible de réutiliser directement la pression résiduelle en fin de détente pour alimenter l'admission, et ainsi de réduire fortement la boucle de travail négatif échappement-compression dans le diagramme pression-volume du cycle de travail de la machine. Le rendement de la machine thermique est optimisé par récupération de la pression de fin de détente. Comme la pression en fin de détente est presque intégralement récupérée comme pression de début de compression, elle peut sans inconvénient être relativement élevée. La machine travaille alors avec de petits volumes de gaz de travail et avec une différence de pression relativement grande entre le trajet fermé chaud et le trajet fermé froid. Cette architecture permet de limiter le poids, l'encombrement et le coût de la machine.

De préférence, la source chaude de la machine thermique comprend l'échappement d'un moteur à combustion interne. Le trajet fermé chaud passe alors par un échangeur de chaleur entre le gaz de travail et des gaz d'échappement du moteur à combustion interne.

La machine thermique est ainsi capable d'exploiter l'énergie thermique rejetée à l'issue d'un processus de combustion interne. La machine thermique est notamment compatible avec une application aux véhicules.

La source chaude de la machine thermique peut aussi comprendre un catalyseur d'épuration des gaz d'échappement d'un moteur à combustion interne. Ceci permet d'utiliser comme source chaude une énergie chimique convertie en énergie thermique grâce à la catalyse et la combustion des imbrûlés en plus de l'énergie thermique rejetée par le moteur à combustion interne.

Le travail mécanique fourni par la machine thermique peut être utilisé directement sous forme mécanique, notamment pour la propulsion d'un véhicule. Le travail mécanique fourni peut également être utilisé pour l'entrainement d'une génératrice de courant électrique, en particulier pour réaliser un véhicule hybride thermique-électrique.

Dans une autre version de l'invention, un arbre de puissance de la machine thermique est relié à un arbre de puissance du moteur à combustion interne, ou encore à un arbre de la transmission.

Cette disposition est particulièrement avantageuse car elle permet de prévoir des éléments de transmission de puissance communs au moteur à combustion interne et à la machine thermique. Le couplage du moteur et de la machine thermique constitue un moteur hybride thermique-thermique. Le rendement du moteur hybride, grâce au travail de la machine thermique, est supérieur à celui d'un moteur à combustion interne utilisé seul.

Cette disposition permet également au moteur d'entraîner la machine thermique lorsque nécessaire, notamment pour faciliter le démarrage de la machine thermique ou pour utiliser la machine thermique comme frein moteur.

La plupart des moteurs à combustion interne sont à mouvement rectiligne alternatifs. L'invention propose que les moyens de compression et les moyens de détente de la machine thermique comprennent chacun au moins un piston, notamment à mouvement rectiligne alternatif. Il est ainsi possible d'obtenir des vitesses de rotation sensiblement comparables entre la machine thermique et le moteur à combustion interne. Le poids, l'encombrement et le coût de la liaison entre l'arbre de puissance de la machine thermique et l'arbre de puissance du moteur à combustion interne sont ainsi réduits.

Dans ce même but, l'invention propose que les moyens de compression et les moyens de détente soient réalisés par au moins un piston commun.

La liaison entre l'arbre de puissance de la machine thermique et l'arbre de puissance du moteur à combustion interne est de préférence réalisée par l'intermédiaire d'un embrayage. L'embrayage autorise le découplage de la machine thermique et du moteur. Le moteur à combustion interne peut ainsi être utilisé seul, sans la machine thermique, ce qui peut transitoirement présenter un intérêt lorsque la machine thermique ne peut pas produire suffisamment de couple.

Lors du démarrage la mise en température du moteur et donc de la source chaude de la machine thermique se fait progressivement. L'embrayage permet de ne mettre en action la machine thermique que de manière différée, une fois que le moteur, ou plus généralement la source chaude, est en température.

Tant que le moteur à combustion interne n'a pas atteint sa température de fonctionnement, la puissance maximale disponible est moindre, les phénomènes d'usure sont renforcés, et la puissance thermique disponible à l'échappement est faible. Le découplage réduit l'usure du moteur au démarrage, et augmente la puissance disponible.

Lorsque le moteur n'est utilisé que sur une brève période de temps, la machine thermique n'a alors pas le temps de restituer un travail supérieur au travail nécessaire à sa mise en route par entrainement à l'aide du moteur. Le découplage de l'embrayage permet ainsi de ne pas dégrader le rendement du moteur lors de brèves utilisations en dehors des températures de fonctionnement optimales.

Selon un autre aspect de l'invention, la pression dans le trajet fermé froid de la machine thermique est, en fonctionnement établi, supérieure à la pression atmosphérique, en particulier de l'ordre de 0.1 à 1 MPa (1 à 10 bar).

Pour augmenter la masse de gaz de travail dans la machine thermique et compenser les éventuelles fuites, l'invention comprend un compresseur capable d'injecter du gaz de travail dans le trajet fermé froid.

De préférence, la machine thermique comprend des moyens pour réguler la pression dans le trajet fermé froid.

Il peut être prévu selon l'invention, un réservoir destiné à contenir une réserve de gaz de travail comprimé qui peut sélectivement être mis en communication avec le trajet fermé froid pour initier la montée en pression du trajet fermé froid lors du démarrage de la machine thermique. Cette caractéristique de l'invention a pour avantage de réduire l'apport externe d'énergie nécessaire au démarrage de la machine thermique, et de raccourcir la durée de cette phase de démarrage.

Le trajet fermé chaud peut sélectivement être mis communication avec le réservoir, en particulier pour le remplissage du réservoir. Le pilotage de la mise en communication sélective tient compte de la pression dans le trajet fermé chaud, notamment pour maintenir une pression suffisante.

L'invention prévoit également, lors du remplissage du réservoir, de maintenir une pression suffisante dans le trajet fermé chaud par des moyens de réglage de débit permettant de faire entrer plus de gaz dans le trajet fermé chaud qu'il n'en sort par la sortie. Les moyens de réglage du débit équipent au moins une entrée et une sortie du trajet fermé chaud

Les moyens de réglage du débit permettent de plus un fonctionnement en frein moteur de la machine thermique. Le frein moteur est alors réalisé avec récupération d'énergie par accumulation de gaz de travail sous pression. L'énergie stockée par le frein moteur peut ensuite être restituée par la machine thermique. Outre la présence d'un frein moteur, cette particularité de l'invention présente l'avantage, pour une machine thermique n'étant pas soumise à une charge continue, d'optimiser le rendement global.

Lorsque le groupe de production d'énergie fonctionne en frein moteur, la source chaude est au moins partiellement désactivée. On entend par au moins partiellement désactivée que la quantité d'énergie thermique transmise par la source chaude diminue par rapport au fonctionnement de la source chaude activée. L'apport d'énergie thermique étant plus faible, l'augmentation de pression dans le trajet fermé chaud est également plus faible. Une masse de gaz plus importante peut ainsi être stockée en évitant toute surpression dans le trajet fermé chaud, du fait de sa plus basse température. Cela participe également à l'amélioration du rendement global de la machine thermique.

Lorsque la source chaude de la machine thermique comprend l'échappement d'un moteur à combustion interne, l'alimentation en carburant du moteur est au moins partiellement désactivée pendant le fonctionnement en frein moteur. En conséquence la chaleur disponible à l'échappement du moteur à combustion interne est réduite, ce qui désactive la source chaude de la machine thermique.

Le frein moteur du moteur à combustion interne ne permet pas la récupération d'énergie. Ainsi lorsque le moteur à combustion interne est utilisé comme frein moteur, l'énergie absorbée ne pourra être restituée plus tard par le moteur à combustion interne. L'énergie absorbée est donc perdue.

Selon un autre aspect de l'invention, on peut faire croître le niveau d'énergie dans la source chaude en faisant fonctionner en frein moteur la machine thermique entraînée par le moteur à combustion interne. Le moteur fournit alors à la machine thermique, d'une part l'énergie permettant l'accumulation de gaz de travail sous pression, d'autre part la chaleur nécessaire à la montée en pression dans le trajet fermé chaud. Le frein moteur permet ainsi d'accélérer la montée en pression du trajet fermé chaud, notamment lors du démarrage de la machine thermique.

L'invention prévoit également que l'entrée et la sortie du trajet chaud sont équipées de moyens de réglage de débit permettant d'adapter la puissance produite par la machine thermique relativement à la puissance disponible à la source chaude, notamment lorsque la température de la source chaude varie, en particulier lorsque la source chaude comprend un échappement de moteur à combustion interne.

Les moyens de réglage de débit sont typiquement des moyens de distribution comprenant un réglage au moins parmi : calage, durée, ouverture d'admission et/ou d'échappement. S'entend par calage le moment de la mise en action des moyens de distribution, notamment au regard de la position du piston de la machine thermique.

Pour une machine thermique comprenant des pistons à mouvement linéaire alternatif, l'invention prévoit que les moyens de distribution comprennent des soupapes. Selon un aspect important de l'invention, l'au moins une soupape située à l'entrée du trajet fermé chaud, et/ou l'au moins une soupape située à la sortie du trajet fermé chaud, comprennent une tête et une tige équipée d'un piston d'équilibrage en pression. Le piston d'équilibrage a une face tournée vers la tête et exposée à la pression dans le trajet fermé chaud, et une face opposée à la tête et exposée à la pression dans une chambre de travail par l'intermédiaire d'un conduit faisant communiquer la chambre de travail avec une chambre d'équilibrage. Une face frontale de la tête, opposée à la tige, est exposée à la pression dans la chambre de travail. Une face arrière de la tête, orientée vers la tige, est exposée à la pression dans le trajet fermé chaud.

Ainsi, le piston d'équilibrage subit sur ses deux faces une différence de pression opposée à celle subie par la tête. On évite ainsi de devoir recourir à une force de rappel très élevée pour maintenir la soupape fermée à l'encontre de la force pressante exercée sur la face arrière de la tête par les gaz du trajet fermé chaud. Les contraintes exercées sur la soupape sont donc réduites, augmentant sa durée de vie et facilitant son pilotage.

Par ailleurs, le piston d'équilibrage permet de s'affranchir d'une distribution dite « inversée », c'est-à-dire dans laquelle une soupape s'ouvre non pas en avançant dans la chambre de travail, mais en reculant dans le canal.

La machine thermique prévue par l'invention peut utiliser comme source de chaleur les gaz d'échappement d'un moteur à combustion interne. L'association forme un groupe de production d'énergie mécanique qui peut notamment être intégré comme source motrice d'un véhicule automobile.

L'encombrement, le poids et le coût de l'ensemble sont compatibles avec les exigences actuelles, alors que la consommation spécifique du moteur hybride (quantité de carburant consommée par unité de puissance et unité de temps) se trouve particulièrement abaissée.

D'autres avantages et particularités de l'invention apparaîtront à la lecture de la description suivante relative à des modes de réalisation non limitatifs. Aux dessins annexés :

- la figure 1 représente schématiquement un groupe de production d'énergie mécanique selon l'invention,
- la figure 2 est un diagramme représentant le volume de la chambre de travail, la pression dans la chambre de travail, et l'ouverture des soupapes suivant la position angulaire de l'arbre de la machine thermique,
- La figure 3 est une vue en coupe longitudinale des moyens de distribution lorsqu'une soupape est fermée,
- La figure 4 est une vue en coupe longitudinale des moyens de distribution lorsqu'une soupape est ouverte,
- Les figures 5 à 9 représentent des diagrammes pression-volume montrant la montée en pression de la machine thermique, et
- La figure 10 représente schématiquement une vue en coupe de la machine thermique.

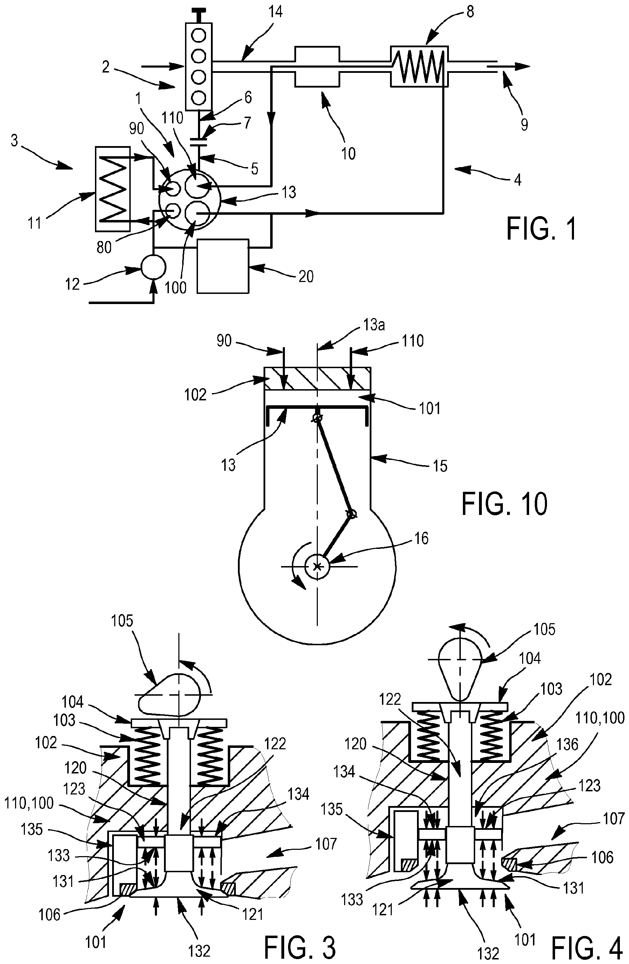

Le groupe de production d'énergie mécanique représenté à la figure 1 comprend une machine thermique 1 et un moteur à combustion interne 2. La machine thermique comprend un piston circulaire 13 à mouvement rectiligne alternatif, lié à un arbre de puissance 5.

Le piston circulaire 13, vu de dessus à la figure 1 et vu en coupe à la figure 10, est monté étanche et mobile en translation axiale dans un cylindre 15 d'axe 13a, commun avec celui du piston circulaire 13. De manière non représentée à la figure 1, mais classique en soi, le piston circulaire 13 est relié à un vilebrequin 16 solidaire de l'arbre de puissance 5, pour transformer le mouvement alternatif du piston circulaire en mouvement de rotation du vilebrequin ou inversement selon le sens du flux de l'énergie mécanique.

Du côté opposé au vilebrequin, c'est-à-dire au dessus du piston circulaire dans la représentation classique d'une machine volumétrique, le piston circulaire est adjacent à une chambre de travail 101 définie dans le cylindre entre le piston circulaire et une culasse 102. La culasse est munie de soupapes qui sont au nombre de quatre: 80, 90, 100, et 110 qui commandent des orifices correspondants dans la culasse et dont les fonctions seront expliquées plus loin. Lorsque toutes les soupapes sont fermées, la chambre de travail est hermétiquement close et son volume varie en fonction de la position du piston circulaire le long de sa course rectiligne dans le cylindre.

L'arbre de puissance 5 de la machine thermique et l'arbre de puissance 6 du moteur sont reliés par l'intermédiaire d'un embrayage 7 pouvant être sélectivement accouplé ou désaccouplé. La machine thermique inclut pour un gaz de travail qui peut être de l'air, un trajet fermé froid 3 allant de l'orifice commandé par la soupape d'échappement 80 à l'orifice commandé par la soupape d'admission 90, et un trajet fermé chaud 4 allant de l'orifice commandé par la soupape de compression 100 à l'orifice commandé par la soupape de détente 110.

Le trajet fermé chaud 4 passe par un échangeur de chaleur 8 qui permet un échange de chaleur entre le gaz de travail et des gaz d'échappement 9 du moteur à combustion interne. Le trajet fermé chaud passe également par un catalyseur 10 d'épuration des gaz d'échappement du moteur à combustion interne. L'échangeur de chaleur est à contre-courant, c'est-à-dire que le trajet fermé chaud entre par le côté de la sortie des gaz d'échappement et en sort par le côté de l'entrée des gaz d'échappement. Ensuite le trajet fermé chaud passe par le catalyseur 10 qui est encore plus chaud. Ainsi, lorsqu'il retourne dans la chambre de travail 101 de la machine thermique, délimitée dans le cylindre 15 entre le piston circulaire 13 et une culasse 102, le gaz de travail est à la température du catalyseur 10. L'ensemble du trajet fermé chaud est sensiblement en équipression, correspondant à la pression dans la chambre de travail en début de phase de détente.

Le trajet fermé froid passe par un échangeur de chaleur 11 qui permet un échange de chaleur entre le gaz de travail et l'atmosphère comme source froide. Un compresseur 12 permet d'injecter du gaz de travail dans le trajet fermé froid.

Dans le mode de réalisation préféré de la figure 1, le piston circulaire 13 est un moyen de compression du gaz de travail lorsque son mouvement va dans le sens d'une contraction du volume de la chambre de travail 101, et un moyen de détente du gaz de travail lorsque son mouvement va dans le sens d'une expansion du volume de la chambre de travail.

Le gaz de travail comprimé par les moyens de compression pénètre dans le trajet fermé chaud par une entrée équipée de moyens de distribution comprenant une soupape de compression 100 et ayant une fonction de réglage de débit. Une sortie du trajet fermé chaud est également équipée de moyens de distribution comprenant une soupape de détente 110 et ayant une fonction de réglage de débit. Les moyens de réglage de débit selon l'invention permettent d'adapter la quantité de gaz de travail entrant et sortant du trajet fermé chaud. Pour cela les moyens de distribution à fonction de réglage de débit comprennent un réglage au moins parmi : calage, durée, ouverture (section de passage) à l'entrée et/ou à la sortie du trajet fermé.

Lorsque la puissance disponible à la source chaude est constante, si le flux de gaz de travail compressé circulant entre l'entrée et la sortie du trajet fermé chaud augmente, la température et la pression dans le trajet fermé chaud tendent à diminuer. A l'inverse si le flux de gaz de travail compressé circulant entre l'entrée et la sortie du trajet fermé chaud diminue, la température et la pression dans le trajet fermé chaud tendent à augmenter.

Si le flux de gaz de travail détendu entre l'entrée et la sortie du trajet fermé froid augmente, la température et la pression dans le trajet fermé froid tendent à augmenter. Si le flux de gaz de travail détendu entre l'entrée et la sortie du trajet fermé froid diminue, la température et la pression dans le trajet fermé froid tendent à diminuer. Les moyens de réglage de débit permettent de faire varier la température et la pression dans le trajet fermé chaud et dans le trajet froid.

Lorsque la source chaude comprend l'échappement 14 du moteur à combustion interne, une variation de la vitesse de rotation et/ou de la charge du moteur à combustion interne entraine une variation de la température dans la source chaude. Une variation de température dans la source chaude tend à entraîner une variation de la température et de la pression dans le trajet fermé chaud. La puissance disponible à la source chaude varie dans le même sens que la température de la source chaude.

Une variation du flux de gaz de travail entre l'entrée et la sortie du trajet fermé chaud et/ou l'entrée et la sortie du trajet fermé froid entraine une variation de la puissance produite par la machine thermique. Les moyens de réglage de débit permettent en particulier d'adapter la puissance produite par la machine thermique relativement à la puissance disponible à la source chaude.

En dehors de l'échangeur et du conduit d'échappement, les conduits du trajet fermé chaud sont par exemple de type double paroi à calorifugeage maximal.

Le trajet fermé chaud peut de manière non représentée être équipé d'une soupape de sécurité. En cas de surpression dans le trajet fermé chaud, une partie du gaz de travail est alors libérée dans l'atmosphère pour abaisser la pression et préserver la machine.

En sortie du trajet fermé chaud, le gaz de travail comprimé et chauffé fournit un travail moteur dans les moyens de détente. Le gaz de travail détendu et donc partiellement refroidi est ensuite envoyé dans le trajet fermé froid et traverse l'échangeur thermique 3 avec la source froide. Le gaz de travail détendu par les moyens de détente pénètre dans le trajet fermé froid par des moyens de distribution d'entrée 80. Une sortie du trajet fermé froid est également équipée de moyens de distribution de sortie 90.

La source froide sera de préférence l'atmosphère tel que représenté figure 1. En variante et/ou complémentairement, d'autres sources froides peuvent être choisies, notamment pour une machine fixe un cours d'eau, une installation de production d'eau chaude, ou dans un véhicule un système de chauffage de l'habitacle du véhicule.

Le gaz de travail peut être de différentes natures. La nature du gaz peut être soumise des contraintes notamment législatives et entraîner des surcoûts. C'est pourquoi l'air atmosphérique est le gaz de travail préféré selon l'invention. En cas de fuite de gaz de travail, l'invention prévoit l'injection de gaz de travail dans le trajet fermé froid. En fonctionnement établi, la pression dans le trajet froid est supérieure à la pression atmosphérique, en particulier de l'ordre de 0,1 à 1 MPa. L'injection de gaz de travail est réalisée par l'intermédiaire du compresseur 12. Des moyens non représentés pour réguler la pression dans le trajet fermé froid permettent de déterminer automatiquement la quantité de gaz à injecter.

L'injection de gaz de travail dans le trajet fermé froid provoque une augmentation sensible de la pression dans le trajet fermé froid. Cette augmentation de pression peut notamment servir à accélérer le démarrage de la machine thermique.

L'augmentation de pression au démarrage de la machine thermique peut également être obtenue par un réservoir 20 contenant une réserve de gaz de travail comprimé. Le réservoir est conçu pour que son étanchéité soit supérieure à celle des trajets fermés chaud et froid. Lorsque la machine thermique reste inactive, le réservoir permet de conserver une réserve de gaz comprimé sur une période allant de plusieurs heures à plusieurs jours.

Le réservoir est alimenté en gaz de travail sous pression par une mise en communication sélective avec le trajet fermé chaud. La mise en communication prélevant de l'énergie au trajet fermé chaud, elle est effectuée de préférence lorsque la pression dans le trajet fermé chaud est élevée et que la machine thermique est soumise à une demande de puissance modérée. Cette mise en communication peut également être réalisée en cas de surpression dans le trajet fermé chaud, avant l'ouverture de la soupape de sécurité.

Une fois la réserve alimentée en gaz sous pression, cette réserve peut sélectivement être mise en communication avec le trajet fermé chaud et/ou le trajet fermé froid selon un mode de gestion prédéfini. Dans un mode de gestion préférentiel, la réserve de gaz de travail alimente le trajet fermé froid en particulier en amont de l'échangeur avec la source froide. La mise en communication de la réserve avec le trajet fermé froid augmente la pression à l'entrée des moyens de compression, et donc augmente la pression en sortie des moyens de compression dans le trajet fermé chaud.

La restitution par la réserve d'énergie sous forme de gaz de travail sous pression n'est pas réservée au démarrage de la machine thermique, mais peut également servir lorsque la machine thermique requiert un surplus de puissance, par exemple lors de l'accélération d'un véhicule. Au contraire, le remplissage de la réserve, qui correspond à un prélèvement d'énergie, peut se faire lorsque la machine thermique est faiblement sollicitée et/ou lorsqu'elle fonctionne en frein moteur.

Le frein moteur est réalisé par récupération d'énergie avec accumulation de gaz de travail sous pression. L'énergie stockée par le frein moteur peut ensuite être restituée par la machine thermique. Le frein moteur est obtenu grâce aux moyens de réglage de débit qui permettent de faire rentrer dans le trajet fermé chaud plus de gaz qu'il n'en sort par la sortie.

Le frein moteur va dans le sens d'une augmentation de la pression dans le trajet fermé chaud. Ce frein peut donc servir à accélérer le démarrage de la machine thermique. Si la machine thermique est couplée à un moteur, le moteur fournit alors l'énergie nécessaire à l'arbre de puissance 5 tandis que la chaleur disponible à la source chaude tend à augmenter. Cela crée donc une charge supplémentaire sur le moteur.

En fonctionnement établi, le frein moteur de la machine thermique peut être couplé au flein moteur du moteur à combustion interne, notamment pour ralentir un véhicule automobile équipé d'un tel groupe de production d'énergie mécanique. La source chaude constituée par l'échappement du moteur à combustion interne est alors partiellement désactivée par la réduction de chaleur disponible à l'échappement du moteur à combustion interne.

Lorsqu'il fonctionne en frein moteur, le moteur à combustion interne ne permet pas la récupération d'énergie. C'est pourquoi l'invention prévoit aussi que le groupe de production d'énergie mécanique puisse fournir un frein moteur uniquement par la machine thermique tandis que le moteur à combustion interne est au moins partiellement désactivé. L'utilisation du frein moteur du moteur à combustion interne est utilisée en supplément lorsque davantage de frein est nécessaire.

Les moyens de distribution classiques connus pour les moteurs faisant appel à des soupapes peuvent être utilisés dans la machine thermique. Toutefois, dans une machine thermique selon l'invention il y a dans certaines phases de fonctionnement une pression bien plus forte sur la face arrière de la tête des soupapes, notamment les soupapes 100 et 110 associées au trajet fermé chaud, que sur la face de ces soupapes délimitant la chambre de travail. Un montage classique nécessiterait donc des ressorts de rappel très puissants. Une telle solution impose des contraintes mécaniques pouvant affecter la durée de vie et le pilotage des moyens de distribution. C'est pourquoi l'invention prévoit des moyens de distribution améliorés représentés aux figures 3 et 4.

Les moyens de distribution comprennent une soupape 120 ayant une tête 121 et une tige 122 équipée d'un piston 123 d'équilibrage en pression. La figure 3 illustre une soupape fermée. Une face frontale 132 de la tête, opposée à la tige, est exposée à la pression dans la chambre de travail 101. Une face arrière 131 de la tête, orientée vers la tige, est exposée à la pression dans le trajet fermé chaud. Le piston d'équilibrage a une face 133 tournée vers la tête et exposée à la pression dans le trajet fermé chaud. Le piston d'équilibrage a également une face 134 opposée à la tête et exposée à la pression dans une chambre d'équilibrage 136 qui communique avec la chambre de travail par l'intermédiaire d'un conduit 135. Ainsi la pression dans la chambre d'équilibrage est sensiblement égale à la pression dans la chambre de travail.

La tige de la soupape est montée coulissante dans la culasse 102. Un ressort de rappel 103, coaxial à la tige de soupape, est situé entre la culasse et une rondelle d'appui 104. La rondelle est solidaire de la tige de la soupape de sorte que le ressort exerce sur la soupape un effort tendant à fermer la soupape. La soupape est considérée comme fermée lorsque sa tête est appuyée sur un siège de soupape 106 solidaire de la culasse. Une came 105 prenant appui sur la rondelle tend à ouvrir la soupape et comprimer le ressort. La came est actionnée selon des principes connus du domaine des motorisations de manière à permettre au moins un réglage du débit parmi : calage, durée d'ouverture, ouverture de la soupape. L'ouverture de soupape se définit par la distance entre la tête de soupape et le siège de soupape.

Dans l'exemple de la figure 3, la soupape fermée isole la chambre de travail 101 d'un canal 107 d'entrée dans le trajet fermé chaud ou de sortie du trajet fermé chaud. Typiquement, le canal est à une pression de 40 bars (4 MPa) alors que la pression dans la chambre varie entre 5 et 40 bars (0,5 à 4 MPa). Lorsque la pression dans la chambre est inférieure à la pression dans le conduit, la tête de soupape subit un différentiel de pression dans le sens de l'ouverture de la soupape. Mais le piston d'équilibrage solidaire de la tige de soupape subit un différentiel de pression dans le sens de la fermeture, sensiblement de même valeur. Ainsi un ressort 103 exerçant une force de rappel modérée suffit. Lorsque la came prend appui sur la rondelle 104, une faible pression suffit pour ouvrir la soupape. Dès que la soupape est ouverte, la pression dans la chambre de travail et dans le conduit s'équilibre. Une même pression s'exerce sur les faces de la tête de la soupape et sur les faces du piston d'équilibrage, tel que l'illustre la figure 4. La soupape est donc libre de coulisser dans le sens de la fermeture sous l'action du ressort de rappel.

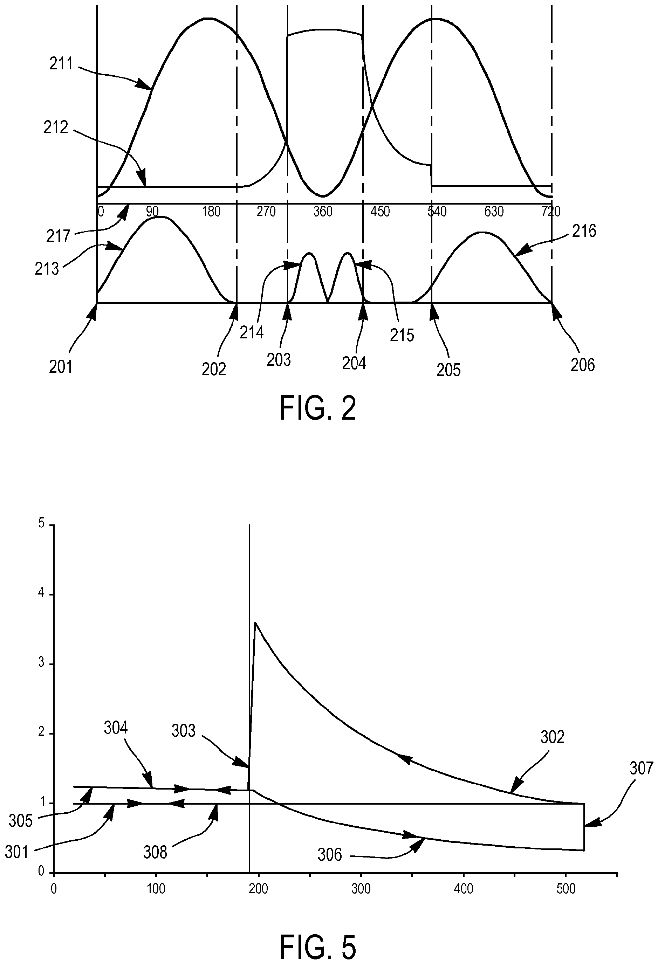

L'ouverture des soupapes, le volume 211 de la chambre de travail, et la pression 212 dans la chambre de travail sont représentées sur la figure 2 en fonction de la position angulaire 217 de l'arbre de puissance de la machine thermique. La figure 2 représente un cycle de la machine thermique en fonctionnement établi. La position angulaire 0° correspond au début de la phase d'admission. Durant l'admission, la soupape 90 de sortie du trajet fermé froid est ouverte, tandis que le volume 211 augmente. Le volume de gaz de travail contenu dans le trajet fermé froid est fortement supérieur au volume de la chambre de travail. La pression à l'admission dans la chambre de travail est égale à la pression dans le trajet fermé froid. Cette pression reste sensiblement constante durant l'admission. La fermeture 202 de la soupape 90 marque la fin de la phase d'admission et le début de la phase de compression.

Durant la compression, toutes les soupapes sont fermées, le volume de la chambre de travail diminue, la pression augmente. La mise en communication 203 de la chambre avec le trajet fermé chaud est réalisée avant que le volume de la chambre ne soit minimal. Cette mise en communication se fait par ouverture 214 de la soupape 100. A ce stade la pression dans la chambre est inférieure à la pression dans le trajet fermé chaud. L'ouverture 214 engendre ainsi une brusque augmentation de la pression dans la chambre de travail. Le volume de la chambre continue à diminuer, assurant le transfert et la compression du gaz de travail qu'elle contient vers le trajet fermé chaud. La soupape 100 se ferme sensiblement lorsque la chambre de travail atteint son volume minimal.

L'ouverture 215 de la soupape 110 en sortie de trajet fermé chaud permet l'admission de gaz de travail comprimé et chauffé dans la chambre dont le volume augmente. La fermeture de la soupape 110 marque le début 204 de la phase de détende du gaz de travail comprimé et chauffé. Durant cette détente, le volume de la chambre augmente tandis que la pression et la température dans la chambre diminuent. Alors que le volume de la chambre approche de sa valeur maximale, l'ouverture 216 de la soupape 80 marque le début 205 d'une phase de refoulement du gaz de travail dans le trajet fermé froid. Cette ouverture de la soupape 216 commence par une brusque mais légère diminution de la pression dans la chambre de travail, après quoi le volume de la chambre de travail diminue ce qui provoque le transfert du gaz dans le trajet fermé froid. La pression est sensiblement constante durant le transfert. La fermeture 206 de la soupape 80, lorsque le volume de la chambre de travail atteint sa valeur minimale, marque la fin de cette phase de refoulement, et correspond au début d'une nouvelle phase d'admission.

La figure 2 représente un cycle de la machine thermique typique pour un fonctionnement établi. De manière non représentée, les soupapes peuvent être ouvertes ou fermées de manière sensiblement différente que représentée, notamment lors du démarrage de la machine thermique.

Toutefois de manière préférentielle, l'ouverture de la soupape de sortie du trajet fermé chaud précèdera sensiblement la fermeture de la soupape d'entrée du trajet fermé chaud de sorte à maintenir la communication avec la chambre durant le croisement des soupapes (courte période pendant laquelle les soupapes sont ouvertes en même temps, pour optimiser la dynamique des gaz). De manière préférentielle également, l'ouverture de la soupape de sortie du trajet fermé froid précèdera sensiblement la fermeture de la soupape d'entrée du trajet fermé froid de sorte à maintenir la communication avec la chambre durant le croisement des soupapes.

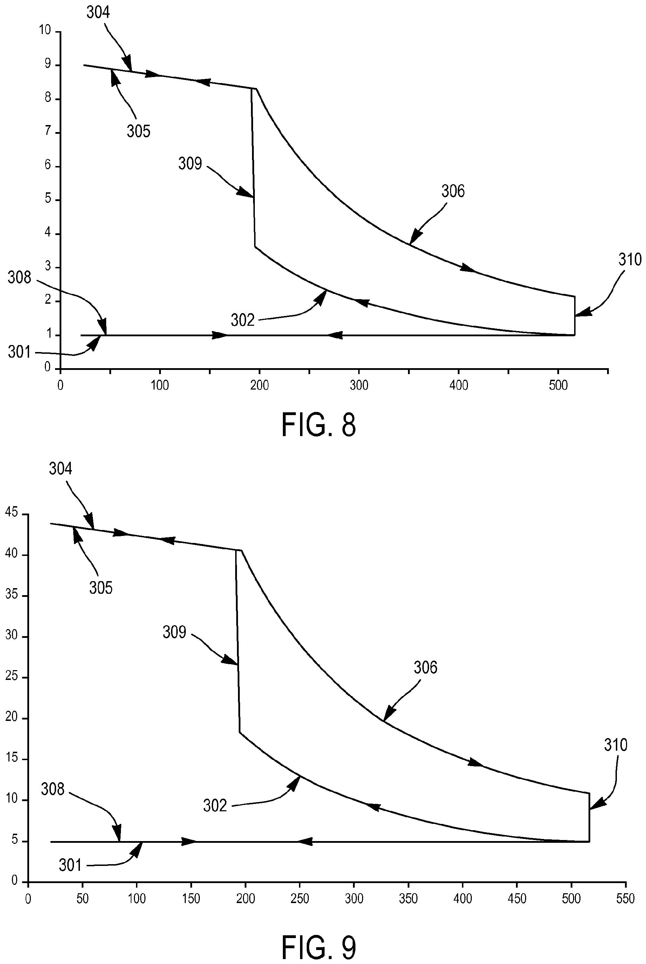

Les figures 5 à 9 représentent des diagrammes pression-volume d'une machine thermique selon l'invention comprenant une unique chambre de travail assurant les moyens de compression et les moyens de détente. Ces figures montrent le démarrage de la machine thermique avec la montée en pression des trajets fermés chaud et froid. le démarrage représenté est réalisé de manière séquentielle, avec d'abord figures 5 à 7 une montée en pression du trajet fermé chaud sans transfert de chaleur, puis figure 8 la montée en température de la source chaude, et enfin la montée en pression du trajet fermé froid. Les valeurs de volume en abscisses sont indiquées en centimètres cubes, les valeurs de pression en ordonnées sont indiquées en bars.

La montée en pression du trajet fermé chaud illustré dans l'exemple des figures 5 à 7 est réalisée alors que le trajet fermé froid communique avec l'atmosphère au travers du compresseur 12. La figure 5 représente le cycle de démarrage de la machine thermique.

L'admission 301 de gaz de travail dans la machine thermique se fait de manière isobare jusqu'à ce que la chambre atteigne son volume maximal. Puis le sens de mouvement du piston s'inverse alors que la soupape de sortie du trajet fermé froid se ferme et une compression adiabatique 302 est opérée jusqu'à l'ouverture 303 de la soupape d'entrée dans le trajet fermé chaud. Mais le trajet fermé chaud est à pression atmosphérique. C'est pourquoi tel que l'illustre la figure 5, l'ouverture des moyens de communication avec le trajet fermé chaud produit une brusque diminution 303 de la pression dans la chambre. Le volume du trajet fermé chaud étant nettement supérieur au volume de la chambre de travail, la suite du mouvement du piston jusqu'au volume minimal de la chambre de travail est une injection sensiblement isobare 304 du gaz de travail frais dans le trajet fermé chaud.

Ensuite, la soupape d'entrée dans le trajet chaud se ferme et la soupape de sortie du trajet fermé chaud s'ouvre. Une légère détente isotherme 305 se produit. En raison du croisement des soupapes d'entrée et de sortie du trajet fermé chaud s'ouvre. La compression isotherme 304 et la détente isotherme 305 du gaz de travail apparaissent superposées sur les diagrammes. La soupape de sortie du trajet fermé chaud, la détente s'effectue de manière sensiblement adiabatique 306. Lorsque la machine thermique est en phase de démarrage et que la pression dans le trajet fermé chaud est faible, la pression en fin de détente est inférieure à la pression atmosphérique.

Le trajet fermé froid est à pression atmosphérique. L'ouverture de la soupape d'entrée du trajet fermé froid provoque une brusque augmentation 307 de la pression dans la chambre. La chambre étant en communication avec le trajet fermé froid, l'échappement 308 se fait de manière sensiblement isobare. Sur le diagramme, l'échappement 308 apparaît donc superposé à l'admission 307.

Lors du démarrage illustré par la figure 5, le cycle thermodynamique de la machine est décrit dans le sens trigonométrique. La machine bénéficie d'un apport d'énergie extérieur pour assurer la montée en pression du trajet fermé chaud. A l'issue de ce premier cycle, la pression dans le trajet fermé chaud est sensiblement supérieure à la pression dans le trajet fermé froid.

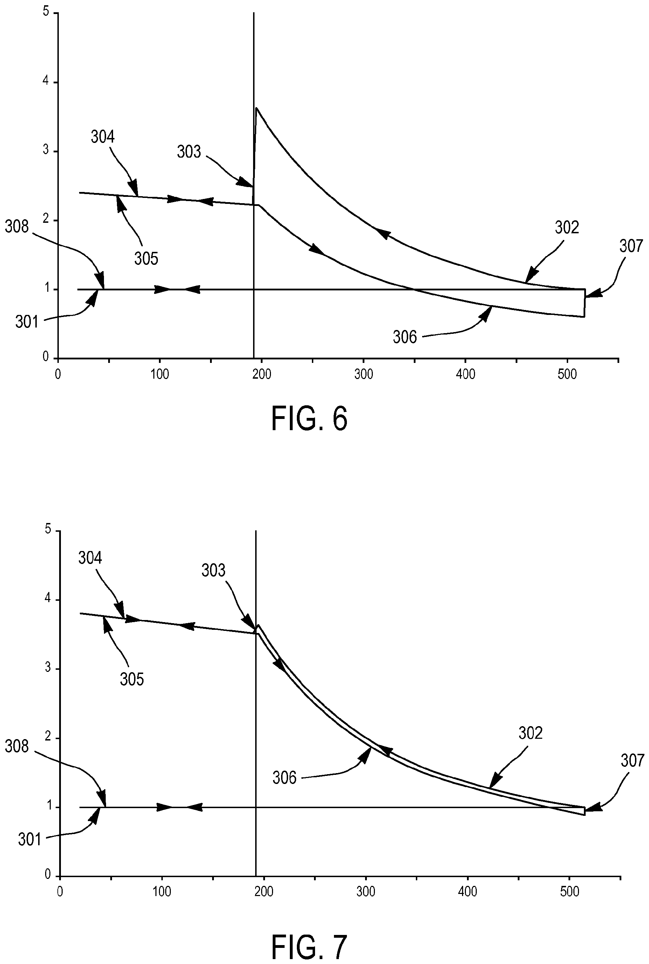

La figure 6 représente le dixième cycle après le démarrage. La figure 6 ne diffère de la figure 5 qu'en ce que la pression à augmenté dans le trajet fermé chaud. La surface du cycle thermodynamique de la figure 6 est sensiblement inférieure à la surface du cycle de la figure 5. L'apport d'énergie à la machine lors du dixième cycle de démarrage est donc plus faible que lors du premier cycle de démarrage.

La figure 7 représente le cinquantième cycle après le démarrage de la machine. La pression dans le trajet fermé chaud atteint 3,5 bars lors de la fermeture de la soupape de sortie. La compression adiabatique 302 et la détente adiabatique 306 sont pratiquement superposées. La surface du cycle thermodynamique est faible, mais il est toujours décrit dans le sens trigonométrique. La consommation d'énergie par la machine thermique est cependant très faible.

Après le cycle représenté figure 7, on active la source chaude. Ce transfert permet une augmentation de la pression dans le trajet fermé chaud. Chaque cycle introduit dans le trajet fermé chaud de l'air frais comprimé, alimentant l'augmentation de pression. La pression dans le trajet fermé chaud poursuit son augmentation. La figure 8 représente le diagramme de la machine thermique après 70 cycles, soit 20 cycles avec transfert de chaleur. A l'issue de la compression adiabatique 302, la pression dans le trajet fermé chaud est supérieure à la pression dans la chambre. L'ouverture de la soupape d'entrée du trajet fermé chaud provoque une brusque augmentation de pression 309 dans la chambre. A la fin de la détente 306, la pression dans la chambre est supérieure à la pression dans le trajet fermé froid. L'ouverture de la soupape d'entrée du trajet fermé froid provoque une brusque diminution 310 de la pression dans la chambre. Le cycle thermodynamique est parcouru dans le sens antitrigonométrique, la machine thermique produit un travail positif.

Après le cycle représenté figure 8, on élève la pression dans le trajet fermé froid, notamment par libération de gaz de travail contenu dans le réservoir 20. La pression du gaz de travail admis dans la chambre de travail 101 au travers de la soupape 90 augmente. Donc la pression en fin de compression et dans le trajet fermé chaud augmente. La figure 9 représente le diagramme de la machine thermique après 90 cycles, soit 20 cycles avec le trajet fermé froid à pression supérieure à la pression atmosphérique. L'ouverture de la soupape d'entrée du trajet fermé chaud provoque une brusque augmentation de pression dans la chambre jusqu'à une valeur de 40 bars. La pression dans le trajet fermé froid s'établit à 5 bars.

A l'issue de la compression adiabatique 302, la pression dans le trajet fermé chaud est supérieure à la pression dans la chambre. L'ouverture de la soupape d'entrée du trajet fermé chaud provoque une brusque augmentation de pression dans la chambre. A la fin de la détente 306, la pression dans la chambre est supérieure à la pression dans le trajet fermé froid. L'ouverture de la soupape d'entrée du trajet fermé froid provoque une brusque diminution 310 de la pression dans la chambre.

Dans une autre version ou en complément, de manière non représentée, le démarrage de la machine est réalisé par transfert de chaleur depuis la source chaude.

Le groupe de production d'énergie mécanique selon l'invention peut être modélisé de la manière suivante :

$$P_D = M_{ECH} \times C_{ECH} \times (T_E - T_A)$$

$$P_U = P_D \times (T_E - T_S) / (T_E - T_A)$$

Avec :

$P_D$ la puissance thermique disponible à l'échappement d'un moteur à combustion interne,
$P_U$ la puissance thermique utile qu'il est possible d'extraire de l'échappement d'un moteur à combustion interne,
$M_{ECH}$ le débit massique de gaz d'échappement,
$C_{ECH}$ la chaleur massique des gaz d'échappement,
$T_E$ la température en kelvin des gaz d'échappement lorsqu'ils entrent dans l'échangeur chaud 8,
$T_S$ la température en Kelvin des gaz d'échappement lorsqu'ils sortent de l'échangeur chaud 8,
$T_A$ la température de la source froide en kelvin, ici l'air atmosphérique.

Pour une température d'entrée des gaz d'échappement de 900°C on peut estimer les rendements suivants :

$$\eta_{REG} = P_U / P_D \approx 70\%$$

$$\eta_C = P_P / P_E \approx 42\%$$

$$\eta_G = P_U / P_D \times \eta_{ECH} = \eta_C \times \eta_C \times \eta_E$$
$$= 42\% \times 70\% \times 94\% \approx 28\%$$

Avec :

$\eta_{REG}$ le rendement de régénération
$\eta_C$ le rendement de cycle
$\eta_G$ le rendement global
$\eta_{ECH}$ le rendement de l'échangeur de chaleur
$\eta_{EXT}$ le rendement extrait
$\eta_E$ le rendement de l'échangeur de chaleur
$P_P$ la puissance produite,
$P_E$ la puissance exploitable utile qu'il est possible d'extraire de l'échappement d'un moteur à combustion interne,

Pour une machine thermique associée à un moteur à combustion interne à essence de 1,8L de cylindrée délivrant 86 kW à 6000 Tr/min, associé à une machine thermique d'une cylindrée de 1.0L, et en tenant compte des contraintes de l'échangeur thermique et de l'entraînement des moyens de distribution, on peut typiquement considérer les valeurs :

- Débit de gaz d'échappement : 340 kg/h
- Débit de gaz de travail dans le trajet fermé chaud : 410 kg/h
- Débit de gaz de travail dans le trajet fermé froid : 485 kg/h
- Température des gaz d'échappement en entrée de l'échangeur : 900°C
- Température des gaz d'échappement en sortie de l'échangeur : 310°C
- Capacité calorifique à pression constante des gaz d'échappement : Cp= 1,25
- Capacité calorifique à pression constante du gaz de travail : Cp= 1,12
- Pression du trajet fermé chaud : 40 bars
- Pression du trajet fermé froid : 5 bars
- Température d'entrée du trajet fermé chaud : 280°C
- Température de sortie du trajet fermé chaud : 810°C
- Température d'entrée du trajet fermé froid : 220°C
- Température de sortie du trajet fermé froid : 50°C
- Puissance thermique des gaz d'échappement : 103 kW
- Transfert de chaleur des gaz d'échappement au gaz de travail dans l'échangeur de chaleur du trajet fermé chaud : 67kW
- Transfert de chaleur du gaz de travail à l'atmosphère dans l'échangeur de chaleur du trajet fermé froid : 24 kW
- Transfert de chaleur par refroidissement des moyens de compression : 15 kW

- Puissance mécanique délivrée : 28 kW à 6000 Tr/min
- Couple spécifique : 53 Nm/l
- Puissance spécifique : 30 kW/l à 6000 Tr/min
- Rendement global : 28%

Dans cet exemple, la chambre de travail passe par un volume minimal non nul qui empêche à la totalité du gaz de travail contenu dans la chambre de passer dans les trajets fermés chaud et froid. Lors de la mise en communication de la chambre avec le trajet fermé chaud, la pression dans la chambre est supérieure à celle lors de la mise en communication avec le trajet fermé froid. La masse de gaz qui reste dans la chambre de travail lorsque la chambre de travail est à son volume minimal n'est pas la même en fin de compression et en fin d'échappement. C'est pourquoi le débit dans le trajet fermé chaud tend dans cet exemple à être sensiblement inférieur au débit dans le trajet fermé froid.

Bien sûr, l'invention n'est pas limitée aux exemples qui viennent d'être décrits et de nombreux aménagements peuvent être apportés à ces exemples sans sortir du cadre de l'invention.

Dans une variante non représentée, l'arbre de puissance 5 de la machine thermique et l'arbre de puissance 6 du moteur sont reliés par un joint mécanique ou un engrenage.

Dans une autre variante non représentée, la liaison entre l'arbre de puissance 5 de la machine thermique et l'arbre de puissance 6 du moteur inclut une boîte de vitesses à au moins deux rapports.

Lorsque les moyens de compression et de détente sont dissociés, ils peuvent complémentairement ou en variante être réalisés par des machines linéaires de type Moineau ou autres, ou encore des turbomachines, liées notamment mécaniquement à l'arbre de puissance de la machine thermique.

Dans un mode de réalisation non représenté, le trajet fermé froid est doté de moyens de communication permettant sélectivement de mettre en communication le trajet fermé froid avec l'atmosphère.

Le démarrage de la machine thermique peut être réalisé de manière simultanée, c'est-à-dire que la montée en température de la source chaude et la montée en pression des trajets fermés froid et chaud peuvent se faire simultanément, notamment dès le démarrage de la machine thermique.

On peut aussi envisager de commencer la montée en pression des trajets froid et chaud avant le démarrage de la machine thermique, notamment sous l'action du compresseur 12 et la mise en communication du réservoir 20. Cette solution présente l'avantage de permettre un démarrage plus rapide de la machine thermique, et une meilleure récupération de l'énergie de la source chaude permettant un rendement global équivalent à un démarrage séquentiel.

Dans le cas d'un groupe de production selon l'invention appliqué à un véhicule automobile, la montée en pression de la machine thermique peut ainsi être initiée dès l'ouverture des portes du véhicule, ou dès la mise sous tension du véhicule, ou encore de manière prédéterminée par l'utilisateur.

La commande et le pilotage des moyens d'admission peuvent faire appel aux systèmes connus de l'homme de métier dans le domaine des moteurs à combustion interne. Le pilotage des moyens d'admission peut notamment être réalisé au moyen d'une commande dite « Desmodromique » ou encore d'une commande électromagnétique dite « Camless ».

D'autres modes de gestion de la réserve de gaz de travail dans le réservoir 20 peuvent être envisagés. Dans un mode de gestion alternatif prévu par l'invention, la réserve est dans un premier temps mise en communication avec le trajet fermé chaud, dans le sens d'une augmentation de pression dans le trajet fermé chaud. Lorsqu'un équilibre est atteint, le réservoir est isolé du trajet fermé chaud puis mis en communication avec le trajet fermé froid.

Dans un autre mode de gestion de la réserve de gaz de travail dans le réservoir 20, la réserve est simultanément mise en communication avec les trajets fermés chaud et froid, de préférence conjointement à l'action du compresseur 12. Ce mode de gestion permet le démarrage de la machine thermique avec une pression initiale supérieure à la pression atmosphérique dans les trajets fermés chaud et froid.

**Revendications**

1. Machine thermique (1) comprenant des moyens de compression pour comprimer de manière adiabatique un gaz de travail, une source de chaleur externe pour chauffer le gaz de travail comprimé dans un échangeur de chaleur (8) d'un trajet fermé chaud (4), des moyens de détente pour détendre de manière adiabatique le gaz de travail comprimé et chauffé prélevé à une sortie du trajet fermé chaud, **caractérisée en ce que** le gaz de travail détendu est ensuite envoyé aux moyens de compression par un trajet fermé froid (3) passant par un échangeur de chaleur (11) avec une source froide, en particulier l'atmosphère.

2. Machine thermique selon la revendication 1, **caractérisée en ce que** les moyens de compression et les moyens de détente comprennent chacun au moins un piston, notamment à mouvement rectiligne alternatif.

3. Machine thermique selon la revendication 2, **caractérisé en ce que** les moyens de compression et les moyens de détente sont réalisés par au moins un piston commun (13).

4. Machine thermique selon l'une des revendications 1 à 3, **caractérisée en ce que** la source chaude comprend l'échappement (14) d'un moteur à combustion interne (2), le trajet fermé chaud (4) passant par un échangeur de chaleur entre le gaz de travail et des gaz d'échappement du moteur à combustion interne.

5. Machine thermique selon l'une des revendications 1 à 4, **caractérisée en ce que** la source chaude comprend un catalyseur d'épuration des gaz d'échappement (9) d'un moteur à combustion interne (2).

6. Machine thermique selon la revendication 4 ou 5, **caractérisée en ce qu'**un arbre de puissance de la machine thermique (5) est relié à un arbre de puissance du moteur à combustion interne (6), notamment par l'intermédiaire d'un embrayage (7).

7. Machine thermique selon l'une des revendications 1 à 6, **caractérisée en ce que** la pression dans le trajet fermé froid (3) est, en fonctionnement établi, supérieure à la pression atmosphérique, en particulier de l'ordre de 0.1 à 1 MPa (1 et 10 bar).

8. Machine thermique selon l'une des revendications 1 à 6, **caractérisée en ce qu'**elle comprend un compresseur (12) capable d'injecter du gaz de travail dans le trajet fermé froid, en particulier pour compenser les fuites.

9. Machine thermique selon la revendication 7 ou 8, **caractérisée en ce qu'**elle comprend des moyens pour réguler la pression (80, 90) dans le trajet fermé froid.

10. Machine thermique selon l'une des revendications 7 à 9, **caractérisée en ce qu'**elle comprend un réservoir (20) destiné à contenir une réserve de gaz de travail comprimé qui peut sélectivement être mis en communication avec le trajet fermé froid pour initier la montée en pression du trajet fermé froid lors du démarrage de la machine thermique.

11. Machine thermique selon la revendication 10, **caractérisée en ce que** le trajet fermé chaud peut sélectivement être mis communication avec le réservoir (20), en particulier pour le remplissage du réservoir.

12. Machine thermique selon l'une des revendications 1 à 11, **caractérisée en ce qu'**une entrée et la sortie du trajet fermé chaud sont équipées de moyens de réglage de débit (100, 110) permettant de faire entrer plus de gaz dans le trajet fermé chaud qu'il n'en sort par la sortie, pour un fonctionnement en frein moteur avec récupération d'énergie par accumulation de gaz de travail sous pression.

13. Machine thermique selon la revendication 12, **caractérisée en ce que** pendant le fonctionnement en frein moteur la source chaude est au moins partiellement désactivée.

14. Machine thermique selon la revendication 13, **caractérisée en ce que**, la source chaude étant constituée par l'échappement (14) d'un moteur à combustion interne, la source chaude est désactivée par la réduction de chaleur disponible à l'échappement du moteur à combustion interne (2) fonctionnant lui-même en frein moteur.

15. Machine thermique selon l'une des revendications 1 à 11, **caractérisée en ce qu'**une entrée et la sortie du trajet fermé chaud sont équipées de moyens de réglage de débit permettant d'adapter la puissance produite par la machine thermique (1) relativement à la puissance disponible à la source chaude, en particulier lorsque la source chaude comprend un échappement (14) de moteur à combustion interne(2).

16. Machine thermique selon l'une des revendications 12 à 15, **caractérisée en ce que** les moyens de réglage de débit sont des moyens de distribution comprenant un réglage au moins parmi : calage, durée, ouverture d'admission et/ou d'échappement.

17. Machine thermique selon l'une des revendications 1 à 16, **caractérisée en ce qu'**elle comprend à l'entrée et à la sortie du trajet fermé chaud une soupape (120) ayant une tête (121) et une tige (122) équipée d'un piston d'équilibrage en pression (123), une face arrière de la tête (131), orientée vers la tige, étant exposée à la pression dans le trajet fermé chaud, le piston d'équilibrage ayant une face (133) tournée vers la tête et exposée à la pression dans le trajet fermé chaud, et une face (134) opposée à la tête et exposée à la pression dans une chambre de travail (101) par l'intermédiaire d'un conduit faisant communiquer la chambre de travail avec une chambre d'équilibrage (136), une face frontale de la tête (132), opposée à la tige (122), étant exposée à la pression dans la chambre de travail.

18. Groupe de production d'énergie mécanique, comprenant un moteur à combustion interne (2) et une machine thermique (1) selon l'une des revendications 1 à 17.

19. Véhicule automobile comportant comme source motrice un groupe de production d'énergie mécanique selon la revendication 18.

**Patentansprüche**

1. Wärmekraftmaschine (1), enthaltend Kompressionseinrichtungen zum adiabatischen Komprimieren eines Arbeitsgases, eine externe Wärmequelle zum Erwärmen des komprimierten Arbeitsgases in einem Wärmetauscher (8) einer geschlossenen Warmstrecke (4), Entspannungseinrichtungen zum adiabatischen Entspannen des erwärmten, komprimierten Arbeitsgases, das an einem Auslass der geschlossenen Warmstrecke entnommen wird, **dadurch gekennzeichnet, dass** das entspannte Arbeitsgas dann den Kompressionseinrichtungen über eine geschlossene Kaltstrecke (3) zugeführt wird, die durch einen Wärmetauscher (11) mit Kältequelle, insbesondere der Atmosphäre, verläuft.

2. Wärmekraftmaschine nach Anspruch 1, **dadurch gekennzeichnet, dass** die Kompressionseinrichtungen und die Entspannungseinrichtungen jeweils zumindest einen insbesondere geradlinig hin und her bewegten Kolben aufweisen.

3. Wärmekraftmaschine nach Anspruch 2, **dadurch gekennzeichnet, dass** die Kompressionseinrichtungen und die Entspannungseinrichtungen mit zumindest einem gemeinsamen Kolben (13) ausgebildet sind.

4. Wärmekraftmaschine nach einem der Ansprüche 1 bis 3, **dadurch gekennzeichnet, dass** die Wärmequelle den Abgasauslass (14) eines Verbrennungsmotors (2) umfasst, wobei die geschlossene Warmstrecke (4) über einen Wärmetauscher zwischen dem Arbeitsgas und dem Abgas des Verbrennungsmotors verläuft.

5. Wärmekraftmaschine nach einem der Ansprüche 1 bis 4, **dadurch gekennzeichnet, dass** die Wärmequelle einen Katalysator zur Reinigung des Abgases (9) eines Verbrennungsmotors (2) umfasst.

6. Wärmekraftmaschine nach Anspruch 4 oder 5, **dadurch gekennzeichnet, dass** eine Kraftwelle der Wärmekraftmaschine (5) mit einer Kraftwelle des Verbrennungsmotors (6) verbunden ist, insbesondere über eine Schaltkupplung (7).

7. Wärmekraftmaschine nach einem der Ansprüche 1 bis 6, **dadurch gekennzeichnet, dass** der Druck in der geschlossenen Kaltstrecke (3) bei laufendem Betrieb höher als der Atmosphärendruck ist, insbesondere in der Größenordnung von 0,1 bis 1 MPa (1 und 10 bar).

8. Wärmekraftmaschine nach einem der Ansprüche 1 bis 6, **dadurch gekennzeichnet, dass** sie einen Kompressor (12) enthält, der Arbeitsgas in die geschlossene Kaltstrecke einbringen kann, insbesondere um Leckagen auszugleichen.

9. Wärmekraftmaschine nach Anspruch 7 oder 8, **dadurch gekennzeichnet, dass** sie Einrichtungen zum Regulieren des Drucks (80, 90) in der geschlossenen Kaltstrecke enthält.

10. Wärmekraftmaschine nach einem der Ansprüche 7 bis 9, **dadurch gekennzeichnet, dass** sie einen Vorratsbehälter (20) enthält, der dazu ausgebildet ist einen Vorrat an komprimiertem Arbeitsgas zu beinhalten, der selektiv mit der geschlossenen Kaltstrecke in Verbindung setzbar ist, um den Druckanstieg in der geschlossenen Kaltstrecke beim Anlaufen der Wärmekraftmaschine einzuleiten.

11. Wärmekraftmaschine nach Anspruch 10, **dadurch gekennzeichnet, dass** die geschlossene Warmstrecke selektiv mit dem Vorratsbehälter (20) in Verbindung gesetzt werden kann, insbesondere zum Befüllen des Vorratsbehälters.

12. Wärmekraftmaschine nach einem der Ansprüche 1 bis 11, **dadurch gekennzeichnet, dass** ein Einlass und der Auslass der geschlossenen Warmstrecke mit Einrichtungen zum Einstellen der Durchsatzmenge (100, 110) ausgestattet sind, die ermöglichen, mehr Gas in die geschlossene Kaltstrecke einzuführen als daraus über den Auslass ausströmt, um einen Motorbremsbetrieb mit Energierückgewinnung durch Ansammlung von Arbeitsgas unter Druck zu ermöglichen.

13. Wärmekraftmaschine nach Anspruch 12, **dadurch gekennzeichnet, dass** während des Motorbremsbetriebs die Wärmequelle zumindest teilweise deaktiviert ist.

14. Wärmekraftmaschine nach Anspruch 13, **dadurch gekennzeichnet, dass** bei einer aus dem Abgasauslass (14) eines Verbrennungsmotors bestehenden Wärmequelle die Wärmequelle durch Verminderung der Wärme deaktiviert wird, die am Abgasauslass des Verbrennungsmotors (2) verfügbar ist, welcher selbst als Motorbremse betrieben wird.

15. Wärmekraftmaschine nach einem der Ansprüche 1 bis 11, **dadurch gekennzeichnet, dass** ein Einlass und der Auslass der geschlossenen Warmstrecke mit Einrichtungen zum Einstellen der Durchsatzmenge ausgestattet sind, die ermöglichen, die von der Wärmekraftmaschine (1) erzeugte Leistung in Bezug auf die an der Wärmequelle verfügbare Leistung anzupassen, insbesondere dann, wenn die Wärmequelle einen Abgasauslass (14) des Verbrennungsmotors (2) umfasst.

**16.** Wärmekraftmaschine nach einem der Ansprüche 12 bis 15, **dadurch gekennzeichnet, dass** die Einrichtungen zum Einstellen der Durchsatzmenge Stelleinrichtungen sind, die zumindest eine Einstellung, die ausgewählt ist aus einem Betriebszeitpunkt, einer Zeitdauer, einer Öffnung des Einlasses und/oder Öffnung des Auslasses, ermöglichen.

**17.** Wärmekraftmaschine nach einem der Ansprüche 1 bis 16, **dadurch gekennzeichnet, dass** sie am Einlass und am Auslass der geschlossenen Warmstrecke ein Ventil (120) mit einem Ventilteller (121) und einem Ventilschaft (122) enthält, das mit einem Druckausgleichskolben (123) ausgestattet ist, wobei eine dem Ventilschaft zugewandte Rückseite des Ventiltellers (131) dem Druck in der geschlossenen Warmstrecke ausgesetzt ist, wobei der Ausgleichskolben eine dem Ventilteller zugewandte und dem Druck in der geschlossenen Warmstrecke ausgesetzte Seite (133) und eine dem Ventilteller entgegengesetzte Seite (134) aufweist, die dem Druck in einer Arbeitskammer (101) über eine Leitung ausgesetzt ist, welche die Arbeitskammer mit einer Ausgleichskammer (136) verbindet, wobei die dem Ventilschaft (122) entgegengesetzte Stirnseite des Ventiltellers (132) dem Druck in der Arbeitskammer ausgesetzt ist.

**18.** Einheit zum Erzeugen von mechanischer Energie, enthaltend einen Verbrennungsmotor (2) und eine Wärmekraftmaschine (1) nach einem der Ansprüche 1 bis 17.

**19.** Kraftfahrzeug, das als Antriebsquelle eine Einheit zum Erzeugen von mechanischer Energie nach Anspruch 18 enthält.

**Claims**

**1.** A heat machine (1) comprising compression means for adiabatically compressing a working gas, an external heat source for heating the compressed working gas in a heat exchanger (8) of a hot closed path (4), means for adiabatically expanding the compressed heated working gas taken at an outlet of the hot closed path, **characterised in that** the expanded working gas is then sent to the compression means by a cool closed path (3) passing through a heat exchanger (11) with a cold source, in particular the atmosphere.

**2.** The heat machine according to claim 1, **characterised in that** the compression means and the expansion means each comprise at least one piston, in particular having a rectilinear reciprocating motion.

**3.** The heat machine according to claim 2, **character-**

**ised in that** the compression means and the expansion means are made by at least one common piston (13).

**4.** The heat machine according to one of claims 1 to 3, **characterised in that** the hot source comprises the exhaust (14) of an internal combustion engine (2), the hot closed path (4) passing through a heat exchanger between the working gas and exhaust gases from the internal combustion engine.

**5.** The heat machine according to one of claims 1 to 4, **characterised in that** the hot source comprises an exhaust gas purifying catalyst (9) of an internal combustion engine (2).

**6.** The heat machine according to claim 4 or 5, **characterised in that** a heat machine power shaft (5) is connected to an internal combustion engine power shaft (6), in particular through a clutch (7).

**7.** The heat machine according to one of claims 1 to 6, **characterised in that** the pressure in the cool closed path (3) is, in a set operation, higher than the atmospheric pressure, in particular in the order of 0.1 to 1 MPa (1 to 10 bar).

**8.** The heat machine according to one of claims 1 to 6, **characterised in that** it comprises a compressor (12) able to inject working gas in the cool closed path, in particular to compensate for leaks.

**9.** The heat machine according to claim 7 or 8, **characterised in that** it comprises pressure regulating means (80, 90) in the cool closed path.

**10.** The heat machine according to one of claims 7 to 9, **characterised in that** it comprises a tank (20) for containing a compressed working gas stock which can be selectively communicated with the cool closed path to initiate the pressure rise of the cool closed path upon starting the heat machine.

**11.** The heat machine according to claim 10, **characterised in that** the hot closed path can be selectively communicated with the tank (20), in particular for filling the tank.

**12.** The heat machine according to one of claims 1 to 11, **characterised in that** an inlet and the outlet of the hot closed path are equipped with flow rate adjusting means (100, 110) allowing the amount of gas entering the hot closed path to be higher than that exiting therefrom, for a motor brake operation with energy recovery through pressurized working gas accumulation.

**13.** The heat machine according to claim 12, **character-**

**ised in that** during the motor brake operation, the hot source is at least partially deactivated.

14. The heat machine according to claim 13, **characterised in that** the hot source being made up of the exhaust (14) of an internal combustion engine, the hot source is deactivated by reducing heat available at the exhaust of the internal combustion engine (2) itself operating in motor brake.

15. The heat machine according to one of claims 1 to 11, **characterised in that** an inlet and the outlet of the hot closed path are equipped with flow rate adjusting means enabling the power produced by the heat machine (1) to be adapted to the power available at the hot source, in particular when the hot source comprises an exhaust (14) of the internal combustion engine (2).

16. The heat machine according to one of claims 12 to 15, **characterised in that** the flow rate adjusting means are dispensing means comprising at least one adjustment among: valve timing, duration, intake and/or exhaust opening.

17. The heat machine according to one of claims 1 to 16, **characterised in that** it comprises at the inlet and the outlet of the hot closed path a valve (120) having a head (121) and a rod (122) equipped with a pressure balancing piston (123), a back face of the head (131), directed towards the rod, being exposed to the pressure in the hot closed path, the balancing piston having a face (133) facing the head and exposed to the pressure in the hot closed path, and a face (134) away from the head and exposed to the pressure in a working chamber (101) through a duct communicating the working chamber with a balancing chamber (136), a front face of the head (132), away from the rod (122), being exposed to the pressure in the working chamber.

18. A mechanical power generation unit, comprising an internal combustion engine (2) and a heat machine (1) according to one of claims 1 to 17.

19. An automotive vehicle comprising as a motive source a mechanical power generation unit according to claim 18.

FIG. 1

FIG. 10

FIG. 3

FIG. 4

FIG. 2

FIG. 5

FIG. 6

FIG. 7

FIG. 8

FIG. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2905728
- WO 2007088463 A1
- WO 2007099438 A1
- US 20020017098 A1